# FASCICULE DE BREVET EUROPEEN

(11) **EP 2 121 844 B1**
(45) Date de publication et mention de la délivrance du brevet: **10.08.2016**
(21) Numéro de dépôt: 08709165.8
(22) Date de dépôt: 21.02.2008
(51) Int. Cl.: C08L 77/02, C08L 77/06

(54) **COMPOSITION POLYMERE THERMOPLASTIQUE A BASE DE POLYAMIDE**
THERMOPLASTISCHE POLYMERZUSAMMENSETZUNG AUF POLYAMIDBASIS
POLYAMIDE BASED THERMOPLASTIC POLYMER COMPOSITION

(30) Priorité: 23.02.2007 FR 0701302
(43) Date de publication de la demande: 25.11.2009
(73) Titulaire: Rhodia Opérations, 93306 Aubervilliers (FR)
(72) Inventeur: AMICI, Marco, I-06131 Perugia (IT); GUAITA, Cesare, I-21049 Tradate (IT)
(74) Mandataire: Benvenuti, Federica
(86) Numéro de dépôt international: PCT/EP2008/052134
(87) Numéro de publication internationale: WO 2008/107314

(56) Documents cités:
- FR-A1- 2 747 391
- FR-A1- 2 779 730
- FR-A1- 2 810 332
- FR-A1- 2 833 015

## Description

La présente invention concerne une composition polymère thermoplastique à base de polyamide, présentant un excellent compromis de propriétés, notamment de propriétés mécaniques et une haute fluidité en fondu. L'invention concerne notamment une composition comprenant au moins un polyamide de haute fluidité et un agent modificateur de chocs comprenant des groupements fonctionnels réactifs avec le polyamide, et un procédé pour la fabrication d'une telle composition.

Parmi les propriétés que l'on cherche souvent à contrôler pour un matériau thermoplastique destiné à être mis en forme par des techniques telles que l'injection, l'injection-gaz, l'extrusion, l'extrusion-soufflage, on cite la rigidité, la résistance aux chocs, la stabilité dimensionnelle, en particulier à température relativement élevée, le faible retrait après mise en forme, l'aptitude à la mise en peinture par différents procédés, l'aspect de surface, la densité. Ces propriétés peuvent être contrôlées, dans certaines limites, par le choix d'un polymère ou par l'adjonction au polymère de composés de différentes natures. Dans ce dernier cas, on parle de compositions polymères. Le choix d'un matériau pour une application donnée est généralement guidé par le niveau de performance exigé vis à vis de certaines propriétés et par son coût. On cherche toujours de nouveau matériaux susceptibles de répondre à un cahier des charges en terme de performance et/ou de coût. Le polyamide est par exemple un matériau largement utilisé, notamment dans le domaine de l'industrie automobile.

Le polyamide est un polymère qui est résistant chimiquement, qui est stable à des températures élevées et qui peut être mélangé à d'autres types de polymères afin d'en modifier les propriétés. On peut par exemple améliorer sa résilience en ajoutant un polymère élastomérique.

Il existe au moins trois propriétés majeures que l'on souhaite obtenir pour ces compositions à base de polyamide, notamment lorsqu'on les utilise dans ces procédés de transformation.

La première de ces propriétés réside dans le fait que ces compositions thermoplastiques mises en oeuvre doivent être caractérisées, à l'état fondu, par une fluidité ou un comportement rhéologique compatible avec les procédés de mise en forme d'intérêts, tel que le moulage par injection. En effet, ces compositions thermoplastiques doivent être suffisamment fluides lorsqu'elles sont en fusion, pour pouvoir être acheminées et manipulées aisément et rapidement dans certains dispositifs de mise en forme, tels que par exemple le moulage par injection.

On cherche également à augmenter les propriétés mécaniques de ces compositions. Ces propriétés mécaniques sont notamment la résistance aux chocs, le module en flexion ou en traction, la contrainte à la rupture en flexion ou en traction, entre autres. On utilise généralement à cet effet des charges de renfort, telles que des fibres de verre.

Enfin, dans le cas des pièces moulées à partir de ces compositions thermoplastiques, on recherche un aspect de surface net et uniforme. Cette contrainte devient un problème difficile à résoudre particulièrement lorsqu'on utilise une composition thermoplastique fortement chargée en fibres de verre, ces fibres de verre altérant négativement l'aspect de surface des pièces moulées. Pour obtenir un aspect de surface acceptable, il est connu d'utiliser des compositions thermoplastiques présentant une haute fluidité. Toutefois, il résulte de cette augmentation de fluidité une diminution des propriétés mécaniques des articles obtenus.

Il en résulte ainsi qu'il est difficile d'obtenir pour une même composition thermoplastique à base de polyamide ces différentes propriétés.

La demanderesse a mis au point une composition polyamide présentant une fluidité en fondue augmentée et des propriétés mécaniques équivalentes ou supérieures, par rapport aux compositions polyamides classiques, et permettant la réalisation d'articles ayant un excellent aspect de surface, notamment lorsque ceux-ci comprennent un fort taux de charges.

L'invention a ainsi pour objet une composition selon la revendication 1 et son procédé d'obtention selon la revendication 9.

Le polyamide a) peut être un polyamide thermoplastique du type 66, c'est-à-dire un polyamide obtenu au moins à partir d'acide adipique et d'hexaméthylène diamine, pouvant éventuellement comprendre d'autres monomères de polyamide.

On entend par polyamide de type 66, un polyamide comprenant au moins 90 % en moles de résidus de monomères d'acide adipique et d'hexaméthylène diamine.

Le polyamide a) peut être un polyamide thermoplastique du type 6, c'est-à-dire un polyamide obtenu au moins à partir de caprolactame, pouvant éventuellement comprendre d'autres monomères de polyamide.

On entend par polyamide de type 6, un polyamide comprenant au moins 90 % en moles de résidus de monomères de caprolactame.

Le polyamide selon l'invention présente un poids moléculaire Mn compris entre 3000 et 25000 g/mol, plus préférentiellement entre 5000 et 15000. Il peut aussi présenter un indice de polydispersité (D=Mw/Mn) inférieur ou égal à 2.

La polymérisation du polyamide de l'invention est notamment réalisée selon les conditions opératoires classiques de polymérisation des polyamides, de manière continue ou discontinue.

Un tel procédé de polymérisation peut comprendre brièvement :
- un chauffage sous agitation et sous pression du mélange des monomères, et de l'eau ; et
- un maintien du mélange à cette température pendant une durée déterminée, puis décompression et maintien pendant une durée déterminée à une température supérieure au point de fusion du mélange, notamment sous azote ou sous vide, pour ainsi continuer la polymérisation par élimination de l'eau formée.

En sortie de polymérisation, le polymère peut être refroidi avantageusement par de l'eau, et extrudé sous forme de joncs. Ces joncs sont coupés pour produire des granulés.

Selon l'invention, le polyamide est fabriqué par ajout en polymérisation, notamment au début de la polymérisation, des monomères du polyamides 6 ou 66, en présence en outre de composés difonctionnels et/ou monofonctionnels. Ces composés difonctionnels et/ou monofonctionnels présentent des fonctions amines ou acides carboxyliques capable de réagir avec les monomères du polyamide. Les composés difonctionnels peuvent présenter la même fonctionnalité amine ou acide carboxylique.

Les composés difonctionnels et/ou monofonctionnels utilisés sont des agents modifiant la longueur de chaînes des polyamides de type 6 ou 66 et permettant d'obtenir des polyamides ayant un indice de fluidité en fondu supérieur ou égal à 10 g/10 min. selon la norme ISO1133 mesuré à une température de 275°C avec une charge de 325 g.

Les monomères du polyamide 66 sont l'acide adipique et l'hexaméthylène diamine, ou l'adipate d'hexaméthylènediamine, également appelé sel Nylon ou sel N. Les monomères du polyamide 6 sont le caprolactame ou ses dérivés.

On peut utiliser au début, en cours ou en fin de polymérisation tout type d'acides mono- ou di-carboxylique, aliphatiques ou aromatiques ou tout types d'amines mono- ou di-amines, aliphatiques ou aromatiques. On peut notamment utiliser comme composé monofonctionnel la n-hexadécylamine, la n-octadécylamine et la n-dodécylamine l'acide acétique, l'acide laurique, la benzylamine et l'acide benzoïque. On peut notamment utiliser comme composé difonctionnel l'acide succinique, l'acide téréphtalique, l'acide isophtalique, l'acide sébacique, l'acide azélaïque, l'acide dodécanoïque, les dimères d'acides gras, le di(β-éthylcarboxy) cyclohexanone, la méthyl-5 pentaméthylène diamine, la métaxylilène diamine, l'isophorone diamine, 1,4 diamine cyclohexane.

On peut également utiliser un excès d'acide adipique ou un excès d'hexaméthylène diamine pour la production d'un polyamide de type 66 présentant une fluidité en fondu élevée.

Préférentiellement, la proportion en groupements terminaux acides est différente de la proportion en groupement terminaux amines, notamment au moins deux fois supérieure ou inférieure. Les quantités de groupements terminaux amines et/ou acides sont déterminées par dosages potentiométriques après dissolution du polyamide. Une méthode est par exemple décrite dans "Encyclopedia of Industrial Chemical Analysis", volume 17, page 293, 1973.

Préférentiellement, le polyamide selon l'invention présente un indice de fluidité en fondu, selon la norme ISO1133 mesuré à une température de 275°C avec une charge de 325 g, compris entre 10 et 50 g/10 min., plus préférentiellement compris entre 20 et 40 g/10 min.

On entend selon l'invention, par agent modificateur du choc, un composé capable de modifier la résistance aux chocs d'une composition polyamide. Ces composés modificateurs du choc comprennent des groupements fonctionnels réactifs avec le polyamide a).

On entend selon l'invention par groupements fonctionnels réactifs avec le polyamide a), des groupements capables de réagir ou d'interagir chimiquement avec les fonctions acides ou amines du polyamide, notamment par covalence, interaction ionique ou hydrogène ou liaison de van der Walls. De tels groupements réactifs permettent d'assurer une bonne dispersion des agents modificateurs de chocs dans la matrice polyamide. On obtient généralement une bonne dispersion avec des particules d'agents modificateurs de chocs ayant une taille comprise entre 0,1 et 1 µm dans la matrice.

Les groupements fonctionnels capables de réagir chimiquement avec le polyamide a) des agents modificateurs de chocs, généralement greffés ou copolymérisés, sont choisis dans le groupe comprenant : les acides, tels que les acides carboxyliques, les acides salifiés, les esters, en particulier les acrylates et les méthacrylates, les ionomères, les groupes glycidyls notamment époxy, les esters glycidyls, les anhydrides notamment l'anhydride maléique, les maléïmides, ou leurs mélanges.

Des tels groupements fonctionnels sur les élastomères sont par exemple obtenus par utilisation d'un co-monomère lors de la préparation de l'élastomère.

Les agents modificateurs de chocs comprenant des groupements fonctionnels réactifs avec le polyamide a) sont choisis dans le groupe comprenant les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymères styrène-acrylonitrile greffés anhydride maléique, les copolymères acrylonitrile butadiène styrène greffés anhydride maléique, et leurs versions hydrogénées.

La proportion en poids des élastomères b) de l'invention dans la composition totale est comprise entre 0,1 et 10 %, notamment les valeurs 1, 2, 3, 4, 5, 6, 7, 8, 9 et 10 ou tout intervalle composé desdites valeurs, notamment entre 1 et 6 %.

Pour améliorer les propriétés mécaniques de la composition selon l'invention, il peut être avantageux de lui adjoindre au moins une charge de renfort et/ou de remplissage préférentiellement choisie dans le groupe comprenant les charges fibreuses telles que les fibres de verre, les charges minérales telles que les argiles, le kaolin, ou des nanoparticules renforçantes ou en matière thermodurcissable, et les charges en poudre telles que le talc. Le taux d'incorporation en charge de renfort et/ou de remplissage est conforme aux standards dans le domaine des matériaux composites. Il peut s'agir par exemple d'un taux de charge de 1 à 50 % en poids, par rapport au poids total de la composition.

La composition peut comprendre, outre le polyamide modifié de l'invention, un ou plusieurs autres polymères, de préférence polyamides ou copolyamides.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les catalyseurs, les agent d'amélioration de la résilience comme des élastomères éventuellement greffés, les stabilisants lumière et/ou thermique, les antioxydants, les antistatiques les colorants, les matifiants, les additifs d'aide au moulage ou autres additifs conventionnels.

Ces charges et additifs peuvent être ajoutés au polyamide modifié par des moyens usuels adaptés à chaque charges ou additifs, tel que par exemple lors de la polymérisation ou en mélange en fondu.

Les compositions thermoplastiques sont généralement obtenues par mélange des différents composés entrant dans la composition, les composés thermoplastiques étant sous forme fondue. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, soumise à une force de cisaillement, et véhiculée. De tels dispositifs sont parfaitement connus de l'homme du métier.

Selon un premier mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important.

On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

L'utilisation des compositions selon l'invention est particulièrement intéressante dans le cadre de la fabrication d'articles pour l'industrie automobile ou électrique, en particulier pour le moulage des pièces de grandes tailles ou à la géométrie complexe.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

Les composés utilisés sont les suivants :
- PA1: Polyamide 66 ayant un MFI de 2,7 g/10 minutes (selon la norme ISO1133 mesuré à 275°C sous 325 g de charge) et un IV de 140. Teneurs en groupements terminaux suivants : GTA = 40 meq/kg, GTC = 60 meq/kg.
- PA2 : Polyamide 66 ayant un MFI de 30 g/10 minutes (selon la norme ISO1133 mesuré à 275°C sous 325 g de charge) et un IV de 98. Teneurs en groupements terminaux suivants : GTA = 28 meq/kg, GTC = 90 meq/kg. Obtenu par ajout en début de polymérisation de 0,7% molaire d'acide benzoïque.
- Fibres de verre : Vetrotex 99B
- E1 : élastomère terpolymère d'éthylène, ester acrylique et glycidyl méthacrylate (8 % en poids de glycidyl méthacrylate), vendu sous la dénomination Lotader® AX8900 par la société Arkema
- E2 : élastomère copolymère d'éthylène et de butyl ester acrylate, vendu sous la dénomination Lotryl® 30 BA 02 par la société Atofina.
- E3 : élastomère copolymère d'éthylène, n-butyl acrylate et glycidyl méthacrylate, vendu sous la dénomination Elvaloyl® PTW par la société DuPont.
- E4 : élastomère copolymère d'éthylène et d'anhydride maléique, vendu sous la dénomination Exxelor® VA 1840 par la société Exxon Mobil.
- E5 : élastomère copolymère d'éthylène et d'anhydride maléique, vendu sous la dénomination Fusabond® N MN493D, par la société DuPont.
- E6 : élastomère copolymère d'éthylène et acide acrylique, vendu sous la dénomination Primacor® EAA 449, par la société Dow.
- E7 : élastomère copolymere d'éthylène et acetate de vinyle, vendu sous la dénomination Escorene® UL 02528, par la société Exxon Mobil.
- Additifs : cire EBS, et nigrosine vendu sous la dénomination 54/1033 par la société Ferroplast.

Les compositions sont préparées par mélange en phase fondue, à l'aide d'une extrudeuse bi-vis de type WERNER et PFLEIDERER ZSK, des polyamides, de 5 % en poids d'élastomères, de 30 % en poids de fibres de verre, et de 1,3 % en poids d'additifs. Les conditions d'extrusion sont les suivantes : Température: entre 240 et 280°C, Vitesse de rotation: entre 200 et 300 tours/min, Débit entre 25 et 60 kg/heure.

Les différentes compositions préparées sont présentées en tableau 1 :

**Tableau 1**

| **Exemples** | **Polymère** | **Elastomère** | **Test Spiral (cm)** | **Choc Charpy non entaillé (KJ/m²)** |
|---|---|---|---|---|
| C1 | PA1 | - | 25 | 86,3 |
| C2 | PA1 | E1 | 24 | 89,7 |
| C3 | PA2 | - | 46 | 58,2 |
| 1 | PA2 | E1 | 47 | 82,2 |
| 2 | PA2 | E3 | 45 | 84,4 |
| 3 | PA2 | E4 | 45 | 88,1 |
| 4 | PA2 | E5 | 44 | 88,8 |
| 5 | PA2 | 30% E1 +70% E2 | 45 | 86,8 |
| 6 | PA2 | 15% E1 +85% E2 | 46 | 80,8 |
| 7 | PA2 | E6 | 41 | 78,8 |
| 8 | PA2 | E7 | 46 | 79,7 |

La résistance aux chocs Charpy non entaillé est mesuré selon la norme ISO 179/1 eU.

Le test spiral permet de quantifié la fluidité des compositions en mettant en fusion les granulés et en les injectant dans un moule en forme de spirale à section semi-circulaire d'épaisseur 2 mm et de largeur 4 cm, dans une presse BM-Biraghi 85T à une température de fourreau de 275°C, une température de moule de 80°C et avec une pression d'injection maximale de 130 bars, ce qui correspond à un temps d'injection d'environ 0,4 secondes (le résultat est exprimé en longueur de moule remplie correctement par la composition).

On observe ainsi que les compositions obtenues présentent une excellente compatibilisation entre le polyamide de l'invention et les élastomères greffés, ce qui conduit à l'obtention d'articles ayant un excellent compromis de propriétés mécaniques et de fluidité en phase fondue. On observe par ailleurs que les articles des exemples 1-8 présentent un bon aspect de surface.

## Revendications

1. Composition comprenant au moins :
a) un polyamide de type 6 ou 66 obtenu par un procédé de polymérisation des monomères du polyamide 6 ou 66 en présence de composés monofonctionnels et/ou difonctionnels comprenant des fonctions acides carboxyliques ou amines ; ledit polyamide ayant un indice de fluidité en fondu supérieur ou égal à 10 g/10 min. selon la norme ISO1133 mesuré à une température de 275°C avec une charge de 325 g et un poids moléculaire Mn compris entre 3000 et 25000 g/mol; ledit polyamide de type 6 étant un polyamide comprenant au moins 90 % en moles de résidus de monomères de caprolactame ;
ledit polyamide de type 66 étant un polyamide comprenant au moins 90 % en moles de résidus de monomères d'acide adipique et d'hexaméthylène diamine ;
lesdits monomères du polyamide 66 étant l'acide adipique et l'hexaméthylène diamine, ou l'adipate d'hexaméthylènediamine, également appelé sel Nylon ou sel N ;
lesdits monomères du polyamide 6 sont le caprolactame ou ses dérivés ; et
b) un agent modificateur du choc comprenant des groupements fonctionnels réactifs avec le polyamide a), choisi dans le groupe comprenant les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymères styrène-acrylonitrile greffés anhydride maléique, les copolymères acrylonitrile butadiène styrène greffés anhydride maléique, et leurs versions hydrogénées,
la proportion dudit agent modificateur de chocs dans la composition étant comprise entre 0,1 et 10 % en poids.

2. Composition selon la revendication 1, **caractérisée en ce que** l'indice de polydispersité du polyamide est inférieur ou égal à 2.

3. Composition selon la revendication 1 ou 2, **caractérisée en ce que** le polyamide est obtenu notamment par ajout au début, en cours ou en fin de polymérisation d'acides mono- ou di-carboxylique, aliphatiques ou aromatiques, et/ou d'amines mono- ou di-amines, aliphatiques ou aromatiques.

4. Composition selon l'une quelconque des revendications 1 à 3, **caractérisée en ce que** le polyamide présente un indice de fluidité en fondu compris entre 10 et 50 g/10 min.

5. Composition selon l'une quelconque des revendications 1 à 4, **caractérisée en ce que** le polyamide présente un indice de fluidité en fondu compris entre 20 et 40 g/10 min.

6. Composition selon l'une quelconque des revendications 1 à 5, **caractérisé en ce que** les groupements fonctionnels capables de réagir chimiquement avec le polyamide a) de l'agent modificateur de chocs sont choisis dans le groupe comprenant : les acides, tels que les acides carboxyliques, les acides salifiés, les esters, en particulier, les acrylates et les méthacrylates, les ionomères, les groupes glycidyls notamment époxy, les esters glycidyls, les anhydrides notamment l'anhydride maléique, les maléïmides, ou leurs mélanges.

7. Composition selon l'une quelconque des revendications 1 à 6, **caractérisée en ce que** la proportion d'agents modificateurs de chocs dans la composition est comprise entre 1 et 6 % en poids.

8. Composition selon l'une quelconque des revendications 1 à 7, **caractérisée en ce que** ladite composition comprend au moins une charge de renfort et/ou de remplissage.

9. Procédé de fabrication d'une composition selon l'une quelconque des revendications 1 à 8, comprenant au moins une étape de mélange en fondu du polyamide a) et des agents modificateurs de la résistance aux chocs b).

## Patentansprüche

1. Zusammensetzung, umfassend mindestens:
a) ein Polyamid vom 6- oder 66-Typ, erhalten durch ein Verfahren zur Polymerisation der Monomere des Polyamids 6 oder 66 in Gegenwart von monofunktionellen und/oder difunktionellen Verbindungen mit Carbonsäure- oder Aminfunktionen; wobei das Polyamid einen bei einer Temperatur von 275°C mit einer Belastung von 325 g gemessenen Schmelzflussindex größer gleich 10 g/10 min gemäß der ISO-Norm 1133 und ein Molekulargewicht Mn zwischen 3000 und 25.000 g/mol aufweist;
wobei es sich bei dem Polyamid vom 6-Typ um ein Polyamid mit mindestens 90 Mol-% Caprolactam-Monomerresten handelt;
wobei es sich bei dem Polyamid vom 66-Typ um ein Polyamid mit mindestens 90 Mol-% Adipinsäure- und Hexamethylendiamin-Monomerresten handelt;
es sich bei den Monomeren des Polyamids 66 um Adipinsäure und Hexamethylendiamin oder Hexamethylendiaminadipat, das auch als Nylonsalz oder N-Salz bezeichnet wird, handelt;
es sich bei den Monomeren des Polyamids 6 um Caprolactam oder Derivate davon handelt;
und
b) einen Schlagzähigkeitsmodifikator mit funktionellen Gruppen, die gegenüber dem Polyamid a) reaktiv sind, ausgewählt aus der Gruppe bestehend aus Terpolymeren von Ethylen, Acrylsäureester und Glycidylmethacrylat, Copolymeren von Ethylen und Butylesteracrylat, Copolymeren von Ethylen, n-Butylacrylat und Glycidylmethacrylat, Copolymeren von Ethylen und Maleinsäureanhydrid, mit Maleinsäureanhydrid gepfropften Styrol-Maleinimid-Copolymeren, mit Maleinsäureanhydrid modifizierten Styrol-Ethylen-Butylen-Styrol-Copolymeren, mit Maleinsäureanhydrid gepfropften Styrol-Acrylnitril-Copolymeren, mit Maleinsäureanhydrid gepfropften Acrylnitril-Butadien-Styrol-Copolymeren und hydrierten Versionen davon, wobei der Anteil des Schlagzähigkeitsmodifikators in der Zusammensetzung zwischen 0,1 und 10 Gew.-% liegt.

2. Zusammensetzung nach Anspruch 1, **dadurch gekennzeichnet, dass** der Polydispersitätsindex des Polyamids kleiner gleich 2 ist.

3. Zusammensetzung nach Anspruch 1 oder 2, **dadurch gekennzeichnet, dass** das Polyamid insbesondere durch Zugabe von aliphatischen oder aromatischen Mono- oder Dicarbonsäuren und/oder aliphatischen oder aromatischen Mono- oder Diaminen zu Beginn, im Lauf oder am Ende der Polymerisation erhalten wird.

4. Zusammensetzung nach einem der Ansprüche 1 bis 3, **dadurch gekennzeichnet, dass** das Polyamid einen Schmelzflussindex zwischen 10 und 50 g/10 min aufweist.

5. Zusammensetzung nach einem der Ansprüche 1 bis 4, **dadurch gekennzeichnet, dass** das Polyamid einen Schmelzflussindex zwischen 20 und 40 g/10 min aufweist.

6. Zusammensetzung nach einem der Ansprüche 1 bis 5, **dadurch gekennzeichnet, dass** die funktionellen Gruppen des Schlagzähigkeitsmodifikators, die chemisch mit dem Polyamid a) reagieren können, ausgewählt sind aus der Gruppe umfassend: Säuren, wie Carbonsäuren, versalzte Säuren, Ester, insbesondere Acrylate und Methacrylate, Ionomere, Glycidylgruppen, insbesondere Epoxy, Glycidylester, Anhydride, insbesondere Maleinsäureanhydrid, Maleinimide oder Mischungen davon.

7. Zusammensetzung nach einem der Ansprüche 1 bis 6, **dadurch gekennzeichnet, dass** der Anteil des Schlagzähigkeitsmodifikators in der Zusammensetzung zwischen 1 und 6 Gew.-% liegt.

8. Zusammensetzung nach einem der Ansprüche 1 bis 7, **dadurch gekennzeichnet, dass** die Zusammensetzung mindestens einen verstärkenden und/oder streckenden Füllstoff umfasst.

9. Verfahren zur Herstellung einer Zusammensetzung nach einem der Ansprüche 1 bis 8, die mindestens einen Schritt umfasst, bei dem man das Polyamid a) und die Schlagzähigkeitsmodifikatoren b) in der Schmelze mischt.

## Claims

1. Composition comprising at least:
a) a polyamide of type 6 or 66 obtained by means of a process of polymerization of the monomers of the polyamide 6 or 66 in the presence of monofunctional and/or difunctional compounds comprising carboxylic acid or amine functions; said polyamide having a melt flow index of greater than or equal to 10 g/10 min. according to the ISO1133 standard measured at a temperature of 275°C with a load of 325 g and a molecular weight Mn of between 3000 and 25 000 g/mol;
said polyamide of type 6 being a polyamide comprising at least 90 mol% of caprolactam monomer residues;
said polyamide of type 66 being a polyamide comprising at least 90 mol% of adipic acid and hexamethylenediamine monomer residues;
said monomers of the polyamide 66 being adipic acid and hexamethylenediamine, or hexamethylenediamine adipate, also called Nylon salt or N salt;
said monomers of the polyamide 6 being caprolactam or derivatives thereof; and
b) an impact modifier comprising functional groups that react with the polyamide a), chosen from the group comprising ethylene/acrylic ester/glycidyl methacrylate terpolymers, ethylene/butyl ester acrylate copolymers, ethylene/n-butyl acrylate/glycidyl methacrylate copolymers, ethylene/maleic anhydride copolymers, maleic anhydride-grafted styrene/maleimide copolymers, copolymers of styrene/ethylene/butylene/styrene modified with maleic anhydride, maleic anhydride-grafted styrene/acrylonitrile copolymers, maleic anhydride-grafted acrylonitrile/butadiene/styrene copolymers, and hydrogenated versions thereof,
the proportion of impact modifiers in the composition being between 0.1°7o and 10% by weight.

2. Composition according to Claim 1, **characterized in that** the polydispersity index of the polyamide is less than or equal to 2.

3. Composition according to Claim 1 or 2, **characterized in that** the polyamide is obtained in particular by adding, at the beginning, during or at the end of polymerization, aliphatic or aromatic, monocarboxylic or dicarboxylic acids and/or aliphatic or aromatic, monoamines or diamines.

4. Composition according to any one of Claims 1 to 3, **characterized in that** the polyamide has a melt flow index of between 10 and 50 g/10 min.

5. Composition according to any one of Claims 1 to 4, **characterized in that** the polyamide has a melt flow index of between 20 and 40 g/10 min.

6. Composition according to any one of Claims 1 to 5, **characterized in that** the functional groups, of the impact modifier, that are capable of reacting chemically with the polyamide a) are chosen from the group comprising: acids, such as carboxylic acids, salified acids, esters, in particular acrylates and methacrylates, ionomers, glycidyl groups, in particular epoxy groups, glycidyl esters, anhydrides, in particular maleic anhydride, maleimides, or mixtures thereof.

7. Composition according to any one of Claims 1 to 6, **characterized in that** the proportion of impact modifiers in the composition is between 1°7o and 6% by weight.

8. Composition according to any one of Claims 1 to 7, **characterized in that** said composition comprises at least one reinforcing and/or bulking filler.

9. Method for producing a composition according to any one of Claims 1 to 8, comprising at least a step of melt blending the polyamide a) and the impact strength modifiers b).
